# EUROPÄISCHE PATENTSCHRIFT

(11) **EP 2 117 972 B1**
(45) Veröffentlichungstag und Bekanntmachung des Hinweises auf die Patenterteilung: **22.06.2011**
(21) Anmeldenummer: 08707741.8
(22) Anmeldetag: 15.02.2008
(51) Int. Cl.: B65G 19/02, B65G 9/00, E01B 25/26

(54) **HÄNGEFÖRDEREINRICHTUNG MIT EINER WEICHENVORRICHTUNG**
SUSPENDED CONVEYING DEVICE WITH A SWITCHING ARRANGEMENT
CONVOYEUR SUSPENDU AVEC DISPOSITIF D'AIGUILLAGE

(30) Priorität: 16.02.2007 DE 102007007836
(43) Veröffentlichungstag der Anmeldung: 18.11.2009
(73) Patentinhaber: RSL Logistik GmbH & Co. KG, 86899 Landsberg (DE)
(72) Erfinder: SCHÖNENBERGER, Rolf, 86899 Landsberg/Lech (DE)
(74) Vertreter: Tiesmeyer, Johannes
(86) Internationale Anmeldenummer: PCT/EP2008/001180
(87) Internationale Veröffentlichungsnummer: WO 2008/098781

(56) Entgegenhaltungen:
- EP-B- 0 582 047
- DE-A1- 19 800 630

## Beschreibung

Die Erfindung betrifft eine Hängefördereinrichtung, die Führungsschienen und Fördergutträger mit einem jeweiligen Basiskörper und davon zu entgegengesetzten Seiten nach außen abstehenden Laufrollen und eine Weichenvorrichtung umfasst, wobei die Fördergutträger mit jeweils wenigstens einer Laufrolle auf einer Seite des Basiskörpers an einer betreffenden Führungsschiene seitlich hängend längs einer jeweiligen Förderstrecke geführt bewegbar sind, wobei die Laufrolle mit einem Führungsprofil der Führungsschiene in Eingriff steht, wobei die Weichenvorrichtung eine ein Führungsprofil für Fördergutträger aufweisende Ausschleusweichenzunge zum bedarfsweisen Überleiten von Fördergutträgern von einer ersten Förderstrecke zu einer Abzweigförderstrecke umfasst und die Ausschleusweichenzunge seitlich neben einer der ersten Förderstrecke zugeordneten ersten Führungsschiene so angeordnet und zwischen einer Ausschleusstellung und einer Passivstellung verstellbar ist, dass sie in der Ausschleusstellung längs der ersten Förderstrecke auf der ersten Führungsschiene zugeführte Fördergutträger an deren von der ersten Führungsschiene freien Laufrolle auf der anderen Seite des Basiskörpers mit ihrem Führungsprofil in Führungseingriff nehmen und von der ersten Führungsschiene ableiten kann, wohingegen sie in der Passivstellung keine Ausschleuswirkung auf längs der ersten Förderstrecke herangeführte Fördergutträger hat.

Hängefördereinrichtungen mit Führungsschienen und Fördergutträgern sind z. B. aus der EP 0 582 047 B1, der DE 198 16 688 A1, der EP 0 623 497 B1 und der DE 199 43 141 A1 bekannt.

Derartige Hängefördereinrichtungen finden weit verbreitet beispielsweise in der Bekleidungsindustrie Verwendung und werden dort vorwiegend zum Transport von an Kleiderbügeln hängenden Bekleidungsstücken genutzt. Als Fördergutträger dienen dabei sogenannte Bügelträger mit einem Basiskörper, der an seinem unteren Ende einen Hakenbereich zum Einhängen eines Kleiderbügels hat und an seinem oberen Ende ein Paar zu entgegengesetzten Seiten von dem Basiskörper abstehender Laufrollen aufweist. Die Bügelträger sind mit jeweils einer Laufrolle an einer auch als Laufschiene bezeichneten Führungsschiene angehängt, wobei diese Laufrolle im Förderbetrieb an einem Führungsprofil bzw. einer Führungsrille der Laufschiene geführt rollen kann. Der Basiskörper des Bügelträgers erstreckt sich seitlich neben der Laufschiene nach unten hin in einen Förderstrecken-Freiraum. Üblicherweise ist zum Antrieb der Bügelträger ein längs der Laufschiene geführtes Antriebsband vorgesehen. Im Falle des Reibband-Antriebs handelt es sich bei dem Antriebsband um ein Reibband, welches beispielsweise als Endlosband um zwei Umlenkstationen umlaufend angetrieben wird und welches Bügelträger längs der jeweiligen Laufschiene reibschlüssig mitnehmen kann. Hängefördereinrichtungen mit solchen Reibband-Antrieben ermöglichen üblicherweise ein wahlweises Stauen einer Anzahl von Fördergutträgern bei weiterlaufendem Reibband.

Hängefördereinrichtungen der hier betrachteten Art werden häufig auch zur Durchführung von Sortieraufgaben verwendet, wobei nach entsprechenden Sortierkriterien jeweilige Fördergutträger an Abzweigungspunkten aus einer primären Förderstrecke auszuschleusen sind oder längs der primären Förderstrecke weitertransportiert werden sollen. Auch kann bei solchen Sortieraufgaben ein Einschleusen von Fördergutträgern in eine primäre Förderstrecke gefordert sein. Zum Ausschleusen von Fördergutträgern aus einer Förderstrecke bzw. zum Einschleusen von Fördergutträgern in eine Förderstrecke sind Übergabestationen, z. B. aus der EP 0 582 047 B1, und Abzweigstationen, z. B. aus der DE 199 43 141 A1, bekannt. In der EP 0 582 047 B1 ist eine gattungsgemäße Hängefördereinrichtung der eingangs genannten Art beschrieben, bei der die Fördergutträger einseitig mit einer ihrer Laufrollen an betreffenden Führungsschienen hängend geführt bewegbar sind. Die zum Überleiten von Fördergutträgern von einer ersten Förderstrecke zu einer Abzweigförderstrecke vorgesehene Ausschleusweichenzunge hat eine Auflauframpe, die in der Ausschleusstellung so in Bezug auf eine der ersten Förderstrecke zugeordnete erste Führungsschiene angeordnet ist, dass sie längs der ersten Förderstrecke zugeführte Fördergutträger an deren von der ersten Führungsschiene freien Laufrollen in Eingriff nimmt und nach oben führt, bis die jeweils andere Laufrolle über den obersten Bereich der ersten Führungsschiene angehoben ist, so dass der betreffende Fördergutträger aus der ersten Führungsschiene ausgehoben wird und auf die Ausschleusweichenzunge übertritt. Auf der Ausschleusweichenzunge wird der Fördergutträger in die Richtung der Abzweigförderstrecke umgelenkt, wobei eine Ablauframpe der Ausschleusweichenzunge den Fördergutträger wieder nach unten leitet, bis die von der Ausschleusweichenzunge freie Laufrolle mit einer der Abzweigförderstrecke zugeordneten Führungsschiene in Eingriff tritt. Der Fördergutträger muss daher eine Hub- und Absenkbewegung durchführen, wenn er von der ersten Förderstrecke auf die Abzweigförderstrecke umgeleitet wird. Die vorliegende Erfindung befasst sich mit dem Problem des zuverlässigen Ausschleusens bzw. Einschleusens von Fördergutträgern aus einer Förderstrecke bzw. in eine Förderstrecke.

Aufgabe der Erfindung ist es, eine Hängefördereinrichtung mit einer Weichenvorrichtung der eingangs erläuterten Art bereitzustellen, wobei die Weichenvorrichtung zum Ausschleusen von Fördergutträgern aus einer Förderstrecke geeignet ist, einen einfachen Aufbau hat, zuverlässig funktioniert und rasche Weichenschaltzeiten ermöglicht.

Zur Lösung dieser Aufgabe wird vorgeschlagen, eine Hängefördereinrichtung mit den eingangs genannten Merkmalen so auszugestalten, dass die erste Führungsschiene eine Führungsprofilaussparung aufweist, die dazu eingerichtet ist, mittels der Ausschleusweichenzunge auszuschleusende Fördergutträger aus dem Führungseingriff mit der ersten Führungsschiene freizugeben.

Beim Ausschleusen eines Fördergutträgers übernimmt die Ausschleusweichenzunge die Führung des Fördergutträgers, indem sie die Laufrolle des Fördergutträgers in Eingriff nimmt, welche beim Heranführen des Fördergutträgers längs der ersten Förderstrecke frei in Richtung weg von der ersten Führungsschiene nach außen abstand, während die andere Laufrolle mit der ersten Führungsschiene in Führungseingriff stand.

Die Ausschleusweichenzunge kann somit die freie Laufrolle eines betreffenden Bügelträgers in Führungseingriff nehmen, wobei die andere Laufrolle kurz darauf die Führungsprofilaussparung der ersten Führungsschiene erreicht. Die bis dahin an der ersten Führungsschiene geführte Laufrolle kann dann, ohne angehoben werden zu müssen, die Führungsprofilaussparung durchqueren, ohne dort eine Störkontur an der ersten Führungsschiene vorzufinden. Die Führung des Fördergutträgers findet währenddessen bereits durch die Weichenzunge oder ggf. durch einen der Weichenzunge folgenden Führungsschienenabschnitt der Abzweigförderstrecke statt.

Gemäß einer besonders bevorzugten Ausführungsform der Erfindung umfasst die Weichenvorrichtung ein synchron mit der Ausschleusweichenzunge schaltbares Führungselement, das bei in Passivstellung befindlicher Ausschleusweichenzunge so positioniert ist, dass es auf der ersten Förderstrecke zugeführte Fördergutträger in dem die Führungsprofilaussparung enthaltenden Förderstreckenbereich zur Weiterbewegung längs der ersten Förderstrecke führt, und das bei in Ausschleusstellung befindlicher Ausschleusweichenzunge so positioniert ist, das es den Weg zum Ausschleusen der Fördergutträger aus der ersten Förderstrecke freigibt. Bei dem Führungselement handelt es sich vorzugsweise um eine Führungsleiste, die mit der Ausschleusweichenzunge zur Ausführung gemeinsamer Schaltbewegungen gekoppelt ist. Das Führungselement ist vorzugsweise so positioniert, dass es bei in Passivstellung befindlicher Ausschleusweichenzunge längs der ersten Förderstrecke herangeführte Fördergutträger an einer von den Laufrollen des Fördergutträgers beabstandeten Stelle in Führungseingriff nehmen kann, vorzugsweise am obersten Bereich der Fördergutträger. Vorzugsweise ist die Ausschleusweichenzunge durch Änderung ihrer Vertikalposition zwischen der Ausschleusstellung und der Passivstellung umschaltbar. Gemäß einer bevorzugten Ausführungsform der Weichenvorrichtung ist auch das Führungselement durch Änderung seiner Vertikalposition umschaltbar. Die Kopplung von Ausschleusweichenzunge und Führungselement erlaubt die Verwendung eines einzigen Schaltantriebsmittels für die gemeinsamen Umschaltvorgänge. Bei diesem Schaltantriebsmittel kann es sich z. B. um einen pneumatischen Zylinder oder um ein elektromagnetisches Schaltantriebsmittel handeln.

Ausführungsbeispiele der Hängefördereinrichtung nach der Erfindung werden nachstehend unter Bezugnahme auf die Figuren 1-5 näher erläutert.
- Fig. 1: zeigt ein erstes Ausführungsbeispiel einer Ausschleusweichen- vorrichtung einer Hängefördereinrichtung nach der Erfindung in einer perspektivischen Ansicht von oben betrachtet.
- Fig. 2: zeigt die Weichenvorrichtung aus Fig. 1 in einer Rückansicht mit in Ausschleusstellung geschalteter Ausschleusweichenzunge.
- Fig. 3: zeigt die Weichenvorrichtung aus den Figuren 1 und 2 in einer Rückansicht mit in Passivstellung befindlicher Weichenzunge.
- Fig. 4: zeigt ein weiteres Ausführungsbeispiel einer Ausschleusweichen- vorrichtung einer Hängefördereinrichtung nach der Erfindung in einer perspektivischen Ansicht.
- Fig. 5: zeigt in einer grobschematischen Darstellung eine Weichenvor- richtung einer Hängefördereinrichtung nach der Erfindung in einer Draufsicht.

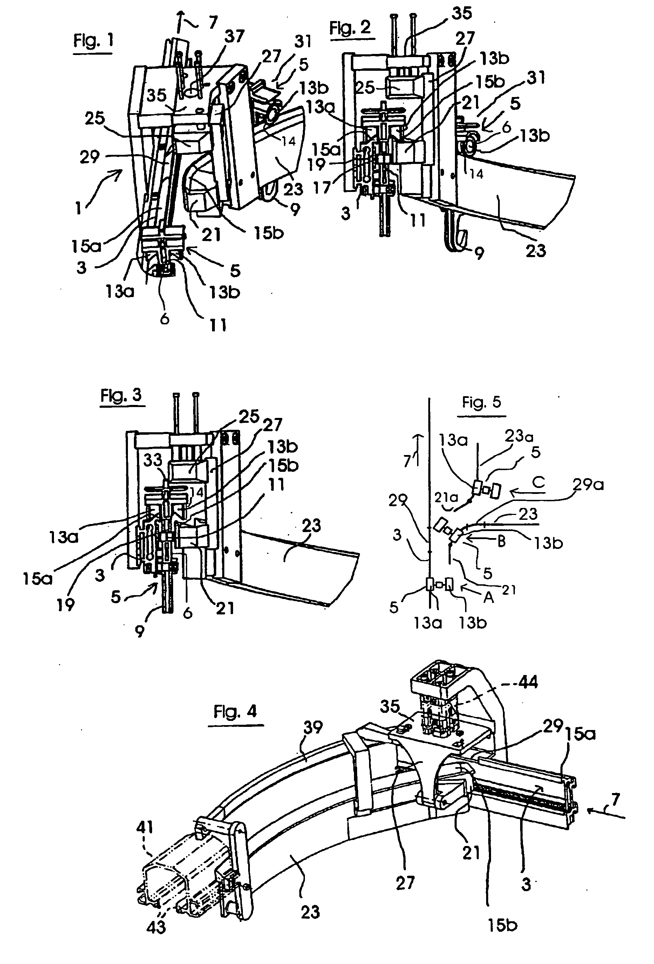

Die als Ausschleusweiche dienende Weichenvorrichtung 1 in Fig. 1 umfasst eine erste Führungsschiene 3, die im betriebsmäßigen Einbauzustand in einer Hängefördereinrichtung einer ersten Förderstrecke zugeordnet ist, längs welcher Fördergutträger 5 in der Förderrichtung 7 bewegbar sind.

Bei den zu transportierenden Fördergutträgern 5 handelt es sich im Beispielsfall um sog. Bügelträger zum Transport von an Kleiderbügeln hängenden Kleidungsstücken. Jeder Bügelträger 5 weist ein Laufwerk 6 und an dessen unterem Ende einen Haken 9 auf, in den der Haken eines Kleiderbügels eingehängt werden kann. Das Laufwerk 6 des Fördergutträgers 5 hat einen im Wesentlichen vertikal ausgerichteten Basiskörper 11 und zwei an den einander entgegengesetzten Lateralseiten des Basiskörpers 11 nach außen abstehende gleichartige konische Laufrollen 13a, 13b. Während der Bewegung längs einer Führungsschiene stützt sich der Fördergutträger 5 mit jeweils einer Laufrolle 13a, 13b an einem schräg ansteigenden Führungsprofil 15a bzw. 15b der Führungsschiene ab, so dass er seitlich an der Führungsschiene angehängt und in Längsrichtung der Führungsschiene geführt ist. An ihrem jeweiligen äußeren Rand, also an der Konusbasis, haben die Laufrollen 13a, 13b im Beispielsfall nicht-konische zylindrische Abschnitte 14 maximalen Durchmessers, mit denen sie auf flachem Untergrund abrollen können.

Unterhalb der Laufrollen 13a, 13b ist jeweils ein seitlicher Vorsprung mit einer äußeren Reibfläche 17 an dem Basiskörper 11 des Laufwerkes 6 vorgesehen. Die der ersten Führungsschiene 3 jeweils zugewandte Reibfläche 17 eines längs der ersten Förderstrecke bewegten Fördergutträgers 5 steht normalerweise mit einem Reibband 19 in reibschlüssigem Kontakt. Das Reibband 19 ist zur Bewegung längs der ersten Förderstrecke an der Führungsschiene 3 geführt und kann bei seiner Bewegung die reibschlüssig angekoppelten Fördergutträger 5 mitnehmen.

Die Weichenvorrichtung umfasst ferner ein hier als Ausschleusweichenzunge 21 bezeichnetes Weichenschaltelement in Gestalt eines bewegbaren Führungsschienensegmentes zum bedarfsweisen Überleiten von Fördergutträgern 5 von der ersten Führungsschiene 3 auf eine Abzweigführungsschiene 23, die einer Abzweigförderstrecke oder zweiten Förderstrecke zugeordnet ist.

Die Ausschleusweichenzunge 21 hat wie auch die erste Führungsschiene 3 und die Abzweigführungsschiene 23 ein Führungsprofil 15b mit einer zur konischen Form der Laufrollen 13 der Fördergutträger 5 komplementären, zum oberen Schienenrand hin schräg ansteigenden Kontur. Die Ausschleusweichenzunge 21 und die Abzweigführungsschiene 23 können daher in gleicher Weise wie die erste Führungsschiene 3 einen Fördergutträger 5 an einer seiner Laufrollen 13 in Eingriff nehmen, um ihn zur Bewegung längs der Abzweigförderstrecke zu führen. In dem in den Figuren gezeigten Beispielsfall ist die Abzweigförderstrecke eine Gefällestrecke, so dass sich die Fördergutträger 5 aufgrund der Schwerkraft längs der Abzweigförderstrecke bewegen können.

In Fig. 3 ist die Situation gezeigt, dass die Ausschleusweichenzunge 21 in ihrer Passivstellung ist. In dieser Passivstellung hat die Ausschleusweichenzunge 21 keine ausschleusende Wirkung auf Fördergutträger 5, die längs der ersten Förderstrecke an der Führungsschiene 3 heran- und weitergeführt werden. Mit dieser Passivstellung der Ausschleusweichenzunge 21 korrespondiert eine Ausschleussperrstellung einer parallel zu der ersten Führungsschiene 3 verlaufenden Führungsleiste 25, die durch den Verbindungssteg 27 mit der daran hängenden Ausschleusweichenzunge 21 verbunden ist. Die Ausschleusweichenzunge 21 und die Führungsleiste 25 sind aus der in Fig. 3 gezeigten abgesenkten Stellung in die in Fig. 2 gezeigte angehobene Stellung gemeinsam bewegbar. Dabei kommt die Ausschleusweichenzunge 21 in ihre Ausschleusstellung seitlich neben der ersten Führungsschiene 3, so dass ihr Führungsprofil 15b auf im Wesentlichen gleicher Höhe mit dem Führungsprofil 15 a der ersten Führungsschiene 3 kommt, wie dies in Fig. 2 zu erkennen ist. Ein an der ersten Führungsschiene 3 herangeführter Fördergutträger 5 wird dabei an der von der ersten Führungsschiene 3 nicht gestützten Laufrolle 13b mit dem Führungsprofil 15b der Ausschleusweichenzunge in Eingriff gebracht, so dass der Fördergutträger 5 übergangsweise an beiden Laufrollen 13a, 13b unterstützt wird. Bei weiterem Vortrieb des Fördergutträgers 5 kommt dann die an der ersten Führungsschiene 3 geführte Laufrolle 13a zu einer Führungsprofilaussparung 29 der ersten Führungsschiene 3 (vgl. Fig. 1). Im Bereich dieser Führungsprofilaussparung 29 kann die Laufrolle 13a des betreffenden Fördergutträgers 5 seitlich zur Abzweigstrecke hin aus der ersten Führungsschiene 3 herausrollen, ohne mit dem Führungsprofil 15a zu kollidieren. Danach wird die Führung des Fördergutträgers 5 von dem Führungsprofil 15b der Ausschleusweichenzunge 21 und der daran angeschlossenen Abzweigführungsschiene 23 übernommen, wobei der Fördergutträger 5 nun mit seiner bisher freien Laufrolle 13b an dem Führungsprofil 15b der Ausschleusweichenzunge 21 bzw. der Abzweigführungsschiene 23 hängt. In den Fig. 1 und 2 ist bei 31 ein solcher ausgeschleuster Fördergutträger 5 zu erkennen.

Mit der Ausschleusstellung des Weichenzungenelementes 21 korrespondiert die Ausschleusfreigabestellung der Führungsleiste 25. In dieser Ausschleusfreigabestellung bildet die Führungsleiste 25 keine Störkontur für die auszuschleusenden Fördergutträger 5. In der Ausschleussperrstellung gemäß Fig. 3 ist die Führungsleiste 25 jedoch so weit abgesenkt, dass sie auf der ersten Führungsschiene 3 laufende Fördergutträger 5 über die Stelle der Führungsprofilaussparung 29 hinweg zur Weiterfahrt längs der ersten Förderstrecke führt. Die Führungsleiste 25 erstreckt sich somit parallel zur ersten Führungsschiene 3 neben und oberhalb der Führungsprofilaussparung 29, so dass sie in der Ausschleussperrstellung gemäß Fig. 3 als Führungsanschlag für den oberen Endabschnitt 33 eines betreffenden Fördergutträgers 5 dienen kann.

Als steuerbares Schaltantriebsmittel für die Führungsleiste 25 und die Ausschleusweichenzunge 21 eignet sich z. B. ein elektromagnetischer Antrieb oder ein pneumatischer Zylinder, der auf der Montageplatte 35 zu montieren ist. In Fig. 1 ist bei 37 ein Durchgangsloch für die mit der Führungsleiste 25 zu koppelnde Kolbenstange des Pneumatikzylinders erkennbar.

Je nachdem, ob ein auf der ersten Führungsschiene 3 herangeführter Fördergutträger 5 längs der ersten Förderstrecke weitertransportiert oder zur Abzweigförderstrecke ausgeschleust werden soll, ist der Pneumatikzylinder entsprechend anzusteuern, um die Ausschleusweichenzunge 21 und die Führungsleiste 25 bedarfsweise in den Schaltzustand gemäß Fig. 3 bzw. in den Schaltzustand gemäß Fig. 2 zu versetzen.

Die Fördergutträger 5 führen individuelle Markierungen, z. B. Barcode-Labels, mit sich, die von einem der Weichenvorrichtung vorgeschalteten Lesegerät erfasst werden. Das Lesegerät übermittelt die Kennungsdaten der Fördergutträger 5 an eine Steuereinrichtung, welche nach Maßgabe ihres Steuerprogramms das Umschalten der Ausschleusweichenzunge 21 und der Führungsleiste 25 steuert.

In Fig. 4 ist ein zweites Ausführungsbeispiel einer Hängefördereinrichtung nach der Erfindung zu erkennen. Elemente in Fig. 4, die Elementen in den Fig. 1 -3 funktional entsprechen, sind mit den gleichen Bezugszahlen gekennzeichnet, so dass zur Erläuterung des Ausführungsbeispiels nach Fig. 4 auf die Beschreibung des ersten Ausführungsbeispiels Bezug genommen werden kann. Bei dem Ausführungsbeispiel gemäß Fig. 4 ist an der Abzweigführungsschiene 23 eine deren Verlauf folgende Hilfsführungsschiene 39 vorgesehen, welche an der Abzweigführungsschiene 23 transportierte Fördergutträger an deren oberen Endabschnitten führen kann. Bei 41 ist in Fig. 4 ein Anschlussschienenstück mit unterbrochenen Linien dargestellt, welches tunnelartig aufgebaut ist und Führungsprofile 43 aufweist, an denen beide Laufrollen 13a und 13b betreffender Fördergutträger abgestützt und somit geführt werden können.

Bei 44 ist in Fig. 4 ein Pneumatikzylinder als Schaltantriebsmittel für die Ausschleusweichenzunge 21 und die damit simultan zu schaltende Führungsleiste (in Fig. 4 nicht erkennbar) angedeutet. Die Ausschleusweichenzunge 21 ist zwischen ihrer angehobenen Ausschleusstellung und ihrer abgesenkten Passivstellung schwenkbar an der Abzweigführungsschiene angeordnet.

In den vorstehend erläuterten Ausführungsbeispielen handelt es sich bei den gezeigten Fördergutträgern 5 um Einzelbügelträger. Die Erfindung ist jedoch nicht auf die Verwendung mit solchen Einzelbügelträgern beschränkt, sondern kann auch Anwendung finden bei Fördergutträgern dieser Bauart, die durch Verbindungselemente gekoppelt sind und somit einseitig an Führungsschienen anzuhängende Laufwagen bilden, die z. B. auf deren Verbindungselementen Haken von mehreren Kleiderbügeln oder dgl. aufnehmen können. Solche auch als Trolleys bezeichnete Laufwagen können somit zwei oder mehr Laufwerke mit den oben schon erläuterten Merkmalen der Laufwerke 6 aufweisen, die durch betreffende Verbindungselemente miteinander verbunden sind.

Bei der in Fig. 4 gezeigten Ausführungsform der Erfindung bildet die Ausschleusweiche einen 90°-Abzweig, d. h. die Anschlussschiene 41 verläuft unter einem Winkel von etwa 90° zu der ersten Führungsschiene 3. Selbstverständlich sind auch andere Abzweigwinkel je nach Krümmungsverlauf der ableitenden Führungsschienen möglich.

In Fig. 5 ist in einer grobschematischen Darstellung eine Hängefördereinrichtung nach der Erfindung in einer Draufsicht gezeigt. Zur Identifizierung bereits aus dem ersten Ausführungsbeispiel bekannter Merkmale sind diese in Fig. 5 mit entsprechend gleichen Bezugszeichen gekennzeichnet, so dass insoweit auf die vorausgegangene Beschreibung Bezug genommen werden kann.

In Fig. 5 nähert sich bei A ein Fördergutträger 5 längs der ersten Führungsschiene 3 der in Ausschleusstellung befindlichen Ausschleusweichenzunge 21. Zu einem etwas späteren Zeitpunkt, der bei B angedeutet ist, hat die Ausschleusweichenzunge 21 den Fördergutträger 5 auf die Führungsschiene 23 ausgeschleust, wobei der vorher mittels seiner Laufrolle 13a gemäß Situation A an der ersten Führungsschiene 3 abgestützte Fördergutträger 5 nunmehr mit seiner anderen Laufrolle 13b gemäß Situation B an der Führungsschiene 23 abgestützt ist. Abweichend von dem ersten Ausführungsbeispiel gemäß Fig. 1-3 kann der Fördergutträger 5 die Abzweigführungsschiene 23 jedoch sogleich wieder verlassen und auf eine gesonderte Förderstrecke übernommen werden, die in Fig. 5 mit der Führungsschiene 23a gekennzeichnet ist. Diese Situation ist mit C gekennzeichnet. Der Fördergutträger 5 ist gerade nach dem oben schon beschriebenen Prinzip von einer weiteren Ausschleusweichenzunge 21a von der Schiene 23 auf die Schiene 23a übernommen worden, wobei er nunmehr wieder an seiner Laufrolle 13a abgestützt ist. Anstelle der Ausschleusweichenzunge 21 a könnte in Fig. 5 auch ein unbewegliches Schienenstück vorgesehen sein, welches jeden herangeführten Fördergutträger 5 zur Strecke 23a überleiten würde. Mit 29a ist in Fig. 5 eine der Aussparung 29 funktional entsprechende Führungsprofilaussparung der Führungsschiene 23 bezeichnet.

Anstelle einer Laufschiene 23a könnte alternativ auch eine nach einem anderen Förderungsprinzip funktionierende Einrichtung vorgesehen sein, etwa ein Schrägförderer mit Mitnehmerelementen, welche bei 21 a mit einzelnen Fördergutträgern in Eingriff kommen und letztere auf eine andere Höhenebene mitnehmen. Auch in diesem Fall kommen verschiedenste Verläufe der Abzweigstrecken in Frage.

## Patentansprüche

1. Hängefördereinrichtung, die Führungsschienen (3, 23) und Fördergutträger (5) mit einem jeweiligen Basiskörper (11) und davon zu entgegengesetzten Seiten nach außen abstehenden Laufrollen (13a, 13b) und eine Weichenvorrichtung umfasst, wobei die Fördergutträger (5) mit jeweils wenigstens einer Laufrolle (13a, 13b) auf einer Seite des Basiskörpers (11) an einer betreffenden Führungsschiene (3, 23) seitlich hängend längs einer jeweiligen Förderstrecke geführt bewegbar sind, wobei die Laufrolle (13a, 13b) mit einem Führungsprofil (15a, 15b) der Führungsschiene in Eingriff steht, wobei die Weichenvorrichtung eine ein Führungsprofil (15b) für Fördergutträger (5) aufweisende Ausschleusweichenzunge (21) zum bedarfsweisen Überleiten von Fördergutträgern (5) von einer ersten Förderstrecke zu einer Abzweigförderstrecke umfasst und die Ausschleusweichenzunge (21) seitlich neben einer der ersten Förderstrecke zugeordneten ersten Führungsschiene (3) so angeordnet und zwischen einer Ausschleusstellung und einer Passivstellung verstellbar ist, dass sie in der Ausschleusstellung längs der ersten Förderstrecke auf der ersten Führungsschiene (3) zugeführte Fördergutträger (5) an deren von der ersten Führungsschiene (3) freien Laufrolle (13b) auf der anderen Seite des Basiskörpers (11) mit ihrem Führungsprofil (15b) in Führungseingriff nehmen und von der ersten Führungsschiene (3) ableiten kann, wohingegen sie in der Passivstellung keine Ausschleuswirkung auf längs der ersten Förderstrecke herangeführte Fördergutträger (5) hat,
**dadurch gekennzeichnet, dass** die erste Führungsschiene (3) eine Führungsprofilaussparung (29) aufweist, die dazu eingerichtet ist, mittels der Ausschleusweichenzunge (21) auszuschleusende Fördergutträger (5) aus dem Führungseingriff mit der ersten Führungsschiene (3) freizugeben.

2. Hängefördereinrichtung nach Anspruch 1, umfassend ein synchron mit der Ausschleusweichenzunge (21) schaltbares Führungselement (25), das bei in Passivstellung befindlicher Ausschleusweichenzunge (21) so positioniert ist, dass es auf der ersten Förderstrecke zugeführte Fördergutträger (5) in dem die Führungsprofilaussparung (29) enthaltenden Förderstreckenbereich zur Weiterbewegung längs der ersten Förderstrecke führt, und das bei in Ausschleusstellung befindlicher Ausschleusweichenzunge (21) so positioniert ist, das es den Weg zum Ausschleusen der Fördergutträger (5) aus der ersten Förderstrecke freigibt.

3. Hängefördereinrichtung nach Anspruch 2, wobei die Ausschleusweichenzunge (21) durch Änderung ihrer Vertikalposition zwischen der Ausschleusstellung und der Passivstellung umschaltbar ist.

4. Hängefördereinrichtung nach Anspruch 2 oder 3, wobei das Führungselement (25) durch Änderung seiner Vertikalposition umschaltbar ist.

5. Hängefördereinrichtung nach einem der Ansprüche 2 bis 4, wobei die Ausschleusweichenzunge (21) und das Führungselement (25) zur Ausführung gemeinsamer Schaltbewegungen mechanisch miteinander gekoppelt sind.

6. Hängefördereinrichtung nach einem der vorhergehenden Ansprüche, umfassend ein pneumatisches oder elektromagnetisches Schaltantriebsmittel (44) für die Ausschleusweichenzunge.

## Claims

1. Suspended conveying device, which comprises guiding rails (3, 23) and carriers for material to be conveyed (5) with a respective base body (11) and rollers (13a, 13b) projecting away on opposite sides and a switching arrangement, wherein the carriers for material to be conveyed (5) can be guided each by at least one roller (13a, 13b) on one side of the base body (11) suspended laterally on a respective guiding rail (3, 23) along a respective conveying path, wherein the roller (13a, 13b) is in engagement with a guiding profile (15a, 15b) of the guiding rail, wherein the switching arrangement comprises a diverter switch blade (21) comprising a guiding profile (15b) for carriers for material to be conveyed (5) for the potential transfer of carriers for material to be conveyed (5) from a first conveying path to a branch conveying path, and the diverter switch blade (21) is arranged laterally next to a first guiding rail (3) assigned to the first conveying path, and can be adjusted between a diverter position and a passive position, so that in the diverter position along the first conveying path the diverter switch blade with its guiding profile (15b) can guidingly engage carriers for material to be conveyed (5) that are supplied on the first guiding rail (3) on the rollers (13b), which are free from the first guiding rail (3), on the other side of the base body (11) and can divert from the first guiding rail (3), whereas in the passive position it has no diverting effect on carriers for material to be conveyed (5) introduced along the first conveying path,
**characterised in that** the first guiding rail (3) comprises a guiding profile recess (29) which is set up to release carriers for material to be conveyed (5) to be diverted by means of the diverter switch blade (21) from guiding engagement with the first guiding rail (3).

2. Suspended conveying device according to claim 1, comprising a guiding element (25) which can be switched synchronously with the diverter switch blade (21), which guiding element is positioned in the case of a diverter switch blade (21) in the passive position, so that on the first conveying path it guides supplied carriers for material to be conveyed (5) in the conveying path area containing the guiding profile recess (29) for moving further along the first conveying path, and which is positioned with an diverter switch blade (21) in diverter position so that it frees the path for diverting the carriers for material to be conveyed (5) from the first conveying path.

3. Suspended conveying device according to claim 2, wherein the diverter switch blade (21) can be switched by changing its vertical position between the diverter position and the passive position.

4. Suspended conveying device according to claim 2 or 3, wherein the guiding element (25) can be switched by changing its vertical position.

5. Suspended conveying device according to one of claims 2 to 4, wherein the diverter switch blade (21) and the guiding element (25) are coupled together mechanically for performing common switching movements.

6. Suspended conveying device according to any one of the preceding claims, comprising a pneumatic or electromagnetic switching drive means (44) for the diverter switch blade.

## Revendications

1. Convoyeur suspendu qui comporte des rails de guidage (3, 23) et des supports de produits à transporter (5) avec un corps de base respectif (11) et des galets de roulement (13a, 13b) s'éloignant de celui-ci vers l'extérieur vers des côtés opposés et un dispositif d'aiguillage, les supports de produits à transporter (5) pouvant être déplacés par guidage en suspension latérale le long d'une voie de transport respective avec respectivement au moins un galet de roulement (13a, 13b) sur un côté du corps de base (11) sur un rail de guidage concerné (3, 23), le galet de roulement (13a, 13b) étant en engagement avec un profilé de guidage (15a, 15b) du rail de guidage, le dispositif d'aiguillage comportant une lame d'aiguille de déviation (21) présentant un profilé de guidage (15b) pour des supports de produits à transporter (5) pour le passage si besoin de supports de produits à transporter (5) d'une première voie de transport à une voie de transport déviée et la lame d'aiguille de déviation (21) étant disposée latéralement à côté d'un premier rail de guidage (3) associé à la première voie de transport et pouvant être réglée entre une position de déviation et une position passive de sorte qu'elle puisse prendre en engagement de guidage, avec un profilé de guidage (15b), des supports de produits à transporter (5) amenés dans la position de déviation le long de la première voie de transport sur le premier rail de guidage (3) sur leur galet de roulement (13b) libre du premier rail de guidage (3) de l'autre côté du corps de base (11) et puisse dériver du premier rail de guidage (3), alors qu'elle n'a, en position passive, aucun effet de déviation sur des supports de produits à transporter (5) amenés le long de la première voie de transport,
**caractérisé en ce que** le premier rail de guidage (3) présente un évidement de profilé de guidage (29) qui est aménagé afin de libérer des supports de produits à transporter (5) à dévier au moyen de la lame d'aiguille de déviation (21) de l'engagement de guidage avec le premier rail de guidage (3).

2. Convoyeur suspendu selon la revendication 1, comprenant un élément de guidage (25) commutable de manière synchrone avec la lame d'aiguille de déviation (21), qui est positionné lorsque la lame d'aiguille de déviation (21) se trouve en position passive de sorte qu'il guide des supports de produits à transporter (5) amenés sur la première voie de transport dans la zone de voie de transport contenant l'évidement de profilé de guidage (29) pour continuer le déplacement le long de la première voie de transport et qui est positionné lorsque la lame d'aiguille de déviation (21) se trouve en position de déviation de sorte qu'il libère la course de déviation des supports de produits à transporter (5) de la première voie de transport.

3. Convoyeur suspendu selon la revendication 2, la lame d'aiguille de déviation (21) pouvant être commutée par la modification de sa position verticale entre la position de déviation et la position passive.

4. Convoyeur suspendu selon la revendication 2 ou 3, l'élément de guidage (25) pouvant être commuté par la modification de sa position verticale.

5. Convoyeur suspendu selon l'une quelconque des revendications 2 à 4, la lame d'aiguille de déviation (21) et l'élément de guidage (25) étant couplés mécaniquement l'un à l'autre pour la réalisation de mouvements de commutation communs.

6. Convoyeur suspendu selon l'une quelconque des revendications précédentes, comprenant un moyen de manoeuvre de commutation pneumatique ou électromagnétique (44) pour la lame d'aiguille de déviation.
